(19) Europäisches Patentamt
European Patent Office
Office européen des brevets

(11) Publication number: **0 400 600 A1**

# (12) EUROPEAN PATENT APPLICATION

(21) Application number: **90110256.6**

(51) Int. Cl.[5]: **C08K 5/3492, C08L 21/00**

(22) Date of filing: **30.05.90**

(30) Priority: **30.05.89 IT 2069189**

(43) Date of publication of application:
**05.12.90 Bulletin 90/49**

(84) Designated Contracting States:
**BE CH DE ES FR GB IT LI NL**

(71) Applicant: **SIGMA PRODOTTI CHIMICI S.r.l.**
**Via T. Tasso, 58**
**I-24100 Bergamo(IT)**

(72) Inventor: **Quintini, Massimo**
**Via Innocenzo XI 10**
**I-24100 Bergamo(IT)**
Inventor: **Re, Alberto**
**Via Castelmorrone 18**
**I-20129 Milano(IT)**

(74) Representative: **Faggioni, Marco, Dr. Ing. et al**
**FUMERO - Studio Consulenza Brevetti**
**Widenmayerstrasse 4/I**
**D-8000 München 22(DE)**

## (54) Flame-retardant additive for solid rubber and flame-retarted solid rubber containing said additive.

(57) Flame-retardant additive for solid rubber, consisting of a compound selected from the group comprising: melamine derivatives and salts of melamine, dimelamine and melamine derivatives, with acids. The invention also includes solid rubber formulations containing said flame-retardant additive.

EP 0 400 600 A1

Xerox Copy Centre

# FLAME-RETARDANT ADDITIVE FOR SOLID RUBBER AND FLAME-RETARDED SOLID RUBBER CONTAINING SAID ADDITIVE

The present invention concerns the use of flame-retardant additives for solid rubber. The invention also includes the flame-retardant solid rubber the formulation of which contains said additives.

In many solid rubber applications, particularly in the field of protective sheathings for electric wires and cables, it is indispensable for said material to have good flame-retardant properties, in order to prevent or at least limit flame propagation.

The rubbers mostly used in the aforementioned application field of electric cable sheathings are acrylic and nitrilic rubbers. In such rubbers the required flame-retardant properties are normally obtained by massive addition (50-100 parts on hundred rubber parts) of inorganic fillers such as, for example, aluminium hydroxide or antimony oxide.

The use of such inorganic additives - which are of course insoluble in the rubber matrix - is however apt to strongly impair the mechanical characteristics of the rubber and, in particular, to considerably reduce the ultimate elongation values. Moreover, they at times interfere with the curing process, making it more difficult to control the reticulation.

Prior art discloses the use of melamine salts in liquid compositions containing rubber latexes and/or synthetic resins as binders, which are used as paints for intumescent flame-retardant coatings. CA-A-1066180 discloses the use of a melamine pyrophosphate as intumescent agent for a liquid composition with chlorinated rubber. JP-A-59102966 discloses the use of a melamine cyanurate as flame-retardant agent in a liquid composition with synthetic resins and natural or dienic rubbers. None of these patents discloses however a formulation for solid rubbers for the production of rubber articles, apt to reach the surprising result of a simultaneous improvement of the mechanical characteristics and of the flame-retardant properties, as is the case of the solid rubber formulation accor ding to the present invention.

Said result besides appears to be fully in contrast with the results obtained in prior art. EP-A-152751 discloses in fact a particular rubber formulation based on ethylene copolymers added with aluminium hydroxide and melamine phosphate, which reach good results for what concerns the values of intumescence and of non-acidity of the smokes, but which strongly reduces the mechanical characteristics of the rubber.

The object of the present invention is therefore to search for flame-retardant additives for solid rubber which do not suffer from the above limitations and inconveniences, and which may thus be mixed in the required proportions with the rubber matrix, without impairing its mechanical characteristics.

Another object of the present invention is to supply a solid rubber formulation with high flame-retardant properties, incorporating said flame-retardant additives.

According to the present invention, said objects are reached by using, as a flame-retardant additive for solid rubber, a compound selected from the group comprising:

- salts of general formula

A.n(HX)

wherein HX is an acid, n is a number greater than 0 and smaller than or equal to 4, and A is melamine of formula

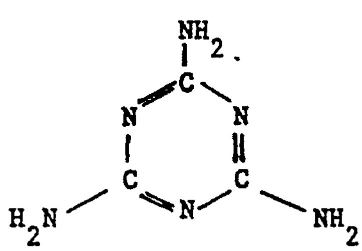

(I)

dimelamine of formula

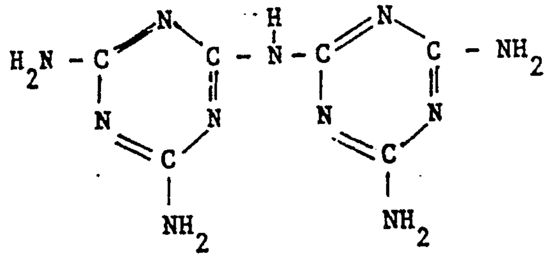

(II)

melamine derivatives of the following general formula:

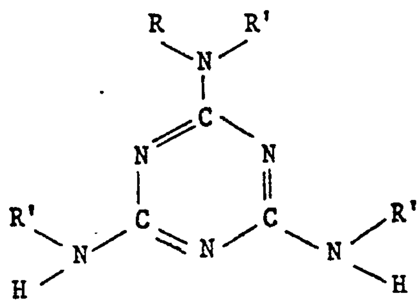

(III)

wherein R and R′ are equal or different and each represent hydrogen, an alkyl radical containing from 1 to 6 carbon atoms, a cycloalyphatic radical, an aromatic radical or an halogenated aromatic radical; or
- melamine derivatives of formula (III).

The HX acid is a mono or polyvalent acid, for example cyanuric, phosphoric, boric or sulphuric acid.

The invention will anyhow be described in further detail hereinafter, also with reference to some formulation examples.

The flame-retardant additives of the present invention are successfully used for the formulation of highly flame-retardant solid rubbers, particularly suited for the production of sheaths for electric cables and for other applications requiring flame-retardant properties. Such formulations comprise:
- 100 parts by weight of rubber;
- 5-100 parts by weight, and preferably 10-50 parts by weight, of the flame-retardant additives of the present invention;

and, furthermore, other conventional additives as fillers, plasticizers, process additives, antioxidants, antiozonants, pigments and the like, according to the different standards of the single applications.

Though, usually, the effect of the compounds of the present invention is sufficient to obtain the required flame-retardant properties, it is however possible to add conventional flame-retardant agents as phosphorous, phosphoric esters, halogenated phosphoric esters, compounds containing phosphorous or halogens, antimony trioxide, aluminium hydroxide - in order to reach special flame-retardant values.

The aforespecified formulation, containing the flame-retardant additives of the present invention, is prepared according to the conventional rubber technology starting from a mix formed of the rubber matrix, of the flame-retardant additive of the present invention, of the curing agents, of the fillers and of the process additives. The mix thus prepared is treated in a mixer, for instance a Banbury type mill, and is subsequently extruded, calendered or pressed at the process temperatures and conditions normally adopted in the rubber technology.

Among the rubber matrixes suited to be added with the flame-retardant additives of the present invention, mention can be made of the acrylic, nitrilic, butylic, styrene-butadiene rubbers. The curing agents depend on the selected type of rubber matrix. For acrylic rubbers incorporating monomers containing reactive sites, use can be made for example of amines, quaternary ammonium salts, activated thiols, lead/thiourea systems, sulphur or sulphur donors. For nitrilic rubbers, peroxides or sulphur/accelerating systems can be used. For butylic rubbers, use can be made of sulphur/accelerating systems, quinoid systems based on quinon dioxime and zinc oxide, or phenol-formaldehide resins.

The fillers used can be for example lampblack of the N 550, N 660, N 650, N 762, and N 774 types,

wollastonite, silica, aluminium silicate, graphite, zinc oxide, talc.

Among the process additives mention can be made of phthalates, as dibutyl phthalate and dioctyl phthalate, stearic acid, sodium stearate, paraffin waxes, ethylene glycols or polyglycols.

There follow some examples illustrating the practical application of the flame-retardant additives of the present invention.

Example 1

100 parts by weight of acrylic rubber based on ethylacrylate/acrylic acid were mixed with 10 parts by weight of melamine cyanurate, 40 parts by weight of N 550 lampblack, and 1 part by weight of stearic acid.

The mix thus obtained was added with 1.5 parts by weight of an ortho-tolyl-biguanidine curing agent, and subsequently reticulated at 150 °C for 24 hours.

The LOI index (standard ASTMD-2863) of the rubber thus obtained was then measured, giving a value equal to 24. Two similar comparison formulations were prepared: the first without any flame-retardant additives and the second containing a conventional flame-retardant additive, and precisely 10 parts by weight of aluminium hydroxide. The LOI indexes for the two formulations were then measured and the values of 18 and 20 were respectively obtained.

Example 2

100 parts by weight of acrylic rubber based on ethylacrylate/acrylic acid/allyl-glycidyl-ether were mixed with 40 parts by weight of melamine cyanurate, 10 parts by weight of aluminium hydroxide, and 1 part by weight of stearic acid.

The mix thus obtained was added with 0.7 parts by weight of a quaternary ammonium salt (Eveite B 18) curing agent, and subsequently reticulated at 170 °C for 10 minutes.

The following were then measured: 100% elongation load (100% modulus indicated in the Table as L100), ultimate breaking load (UBL), ultimate elongation (UE), LOI index, both for the rubber thus obtained and for two similar comparison formulations without the flame-retardant additives of the present invention, wherein the first has been added with 50 parts by weight of N 550 lampblack and the second with 50 parts by weight of aluminium hydroxide. The results of the tests are reported in Table 1 hereunder.

TABLE 1

| | L100 | UBL | UE | LOI |
|---|---|---|---|---|
| | MPa | MPa | % | |
| Example 2 | 4.5 | 15.5 | 280 | 28 |
| Comparison 1 | 4.8 | 15.0 | 250 | 18 |
| Comparison 2 | 4.5 | 10.0 | 150 | 24 |

**Claims**

1) Flame-retardant additive for acrylic, nitrilic, butylic or styrene-butadiene solid rubber, consisting of a compound selected from the group comprising:

- salts of general formula

A.n(HX)

wherein HX is an acid, n is a number greater than 0 and smaller than or equal to 4, and A is melamine of formula

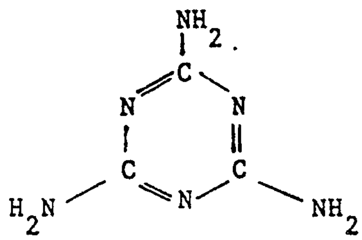

(I)

dimelamine of formula

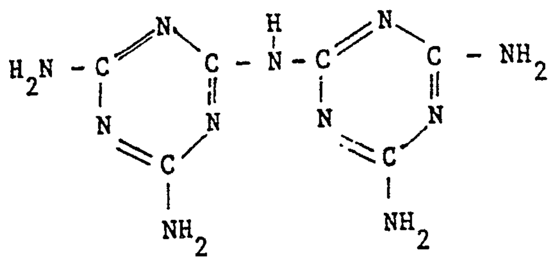

(II)

melamine derivatives of the following general formula

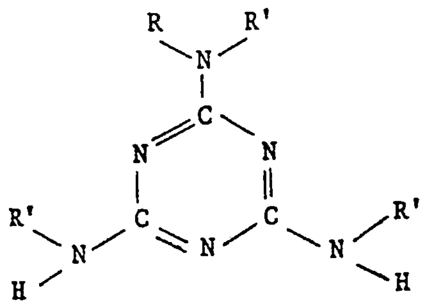

(III)

wherein R and R′ are equal or different and each represent hydrogen, an alkyl radical containing from 1 to 6 carbon atoms, a cycloalyphatic radical, an aromatic radical or an halogenated aromatic radical; or
- melamine derivatives of formula (III).

2) Flame-retardant additive as in claim 1), wherein the flame-retardant additive/rubber weight ratio is in the range between 5/100 and 100/100.

3) Flame-retardant additive as in claim 1), wherein the flame-retardant additive/rubber weight ratio is in the range between 10/100 and 50/100.

4) Flame-retardant additive as in claim 1), consisting of melamine cyanurate.

5) Flame-retardant additive as in claim 1), consisting of melamine phosphate.

6) Flame-retardant additive as in claim 1), wherein said acid HX is cyanuric, phosphoric, boric or sulphuric acid.

7) Acrylic, nitrilic, butylic or styrene-butadiene solid rubber formulation ready for use, having flame-retardant properties, characterized in that it contains a flame-retardant additive consisting of a compound selected from the group comprising:
- salts of general formula
A.n(HX)
wherein HX is an acid and n is a number greater than 0 and smaller than or equal to 4, and A is melamine of formula

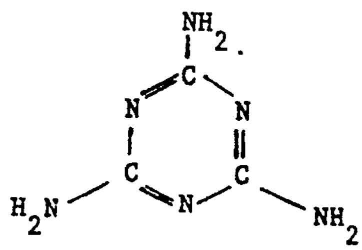

(I)

dimelamine of formula

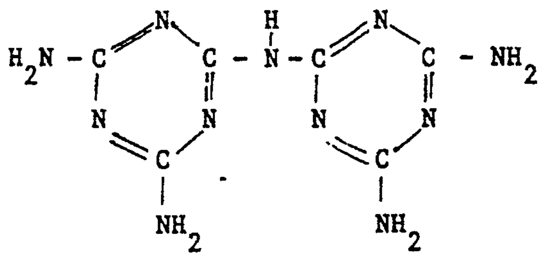

(II)

melamine derivatives of the following general formula

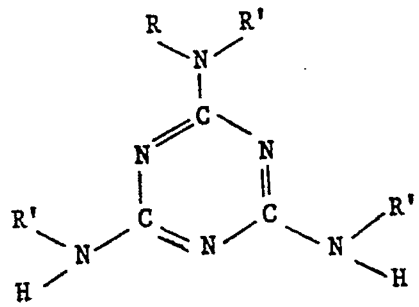

(III)

wherein R and R′ are equal or different and each represent hydrogen, an alkyl radical containing from 1 to 6 carbon atoms, a cycloalyphatic radical, an aromatic radical or an halogenated aromatic radical; or

- melamine derivatives of formula (III).

8) Rubber formulation as in claim 7), wherein the flame-retardant additive/rubber weight ratio is in the range between 5/100 and 100/100.

9) Rubber formulation as in claim 7), wherein the flame-retardant additive/rubber weight ratio is in the range between 10/100 and 50/100.

10) Rubber formulation as in claim 7), wherein said flame-retardant additive consists of melamine cyanurate.

11) Rubber formulation as in claim 7), wherein said flame-retardant additive consists of melamine phosphate.

12) Rubber formulation as in claim 7), used in the production of sheaths for electric cables.

European Patent Office

# EUROPEAN SEARCH REPORT

Application Number

EP 90 11 0256

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | CA-A-1066180 (STAN CHEM INC.)<br>* claim 6; example 1 * | 1-12 | C08K5/3492<br>C08L21/00 |
| X,D | EP-A-0152751 (BAYER AG)<br>* page 5, line 23 - page 6, line 11 *<br>* claims; examples * | 1-12 | |
| X,D | DATABASE WPIL, no. 84-184839, Derwent Publications Ltd, London, GB; &JP-A-59102966 (NIPPON CARBIDE KOGYO K.K.) 14-06-1984<br>* abstract * | 1-12 | |

TECHNICAL FIELDS SEARCHED (Int. Cl.5 )

C08K
C08L

The present search report has been drawn up for all claims

| Place of search | Date of completion of the search | Examiner |
|---|---|---|
| THE HAGUE | 05 SEPTEMBER 1990 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document



EPO FORM 1503 03.82 (P0401)